# EUROPEAN PATENT APPLICATION

(11) **EP 4 354 606 A1**
(43) Date of publication of application: **17.04.2024**
(21) Application number: 23202983.5
(22) Date of filing: 11.10.2023
(51) Int. Cl.: H01M 50/107, H01M 50/167, H01M 10/04, B21D 17/02, B21D 17/04, H01M 10/0587

(54) **SECONDARY BATTERY AND METHOD OF MANUFACTURING SAME**

(30) Priority: 11.10.2022 KR 20220129774
(71) Applicant: Samsung SDI Co., Ltd., Yongin-si, Gyeonggi-do 17084 (KR)
(72) Inventor: YANG, Jun Ho, 17084 Yongin-si (KR); CHOI, Woo Hyuk, 17084 Yongin-si (KR); LEE, Tae Yoon, 17084 Yongin-si (KR); KWON, Jun Hwan, 17084 Yongin-si (KR); KIM, Joung Ku, 17084 Yongin-si (KR); PARK, Hyun Suk, 17084 Yongin-si (KR); LEE, Dong Sub, 17084 Yongin-si (KR)
(74) Representative: Marks & Clerk LLP

(57) **Abstract**

A secondary battery includes: a can having an accommodation space therein; an electrode assembly accommodated in the accommodation space in the can; and a cap assembly sealed with the can. The can has a beading part recessed into a side wall of the can at a region below where the cap assembly is accommodated, and the beading part has an acute angle with respect to the side wall of the can.

## Description

### BACKGROUND

### 1. Field

Aspects of embodiments of the present disclosure relate to a secondary battery and a method of manufacturing the same.

### 2. Description of Related Art

Because lithium-ion secondary batteries have advantages, such as high operating voltage and high energy density per unit weight, they are used as power sources not only for portable electronic devices but also for hybrid and electric vehicles.

Lithium-ion secondary batteries may be classified as cylindrical, prismatic, and pouch-type secondary batteries based on their shape. The cylindrical secondary battery generally includes a cylindrical electrode assembly, a cylindrical can in which the electrode assembly is accommodated, an electrolyte injected into the inside of the can to enable movement of lithium ions, and a cap assembly coupled to one side of the can to prevent electrolyte leakage and to prevent the electrode assembly from being separated.

### SUMMARY

Embodiments of the present disclosure are directed to a secondary battery exhibiting increased capacity while including a sufficiently rigid can and a method of manufacturing the same.

According to an embodiment of the present disclosure, a secondary battery includes: a can having an accommodation space therein; an electrode assembly accommodated in the accommodation space in the can; and a cap assembly sealed with the can. The can has a beading part recessed into a side wall of the can at a region below where the cap assembly is accommodated, and the beading part has an acute angle with respect to the side wall of the can.

The beading part may continuously extend along a circumference of the can.

The acute angle may be in a range from 20° to 45°.

A depth of the beading part inside the can may be in a range from 10% to 20% of a diameter of the can.

The cap assembly may be seated on an upper portion of the beading part.

A method of manufacturing a secondary battery, according to an embodiment of the present disclosure, includes: accommodating an electrode assembly in an accommodation space in a can; forming a beading part by pressing a surface of the can with a knife; seating a cap assembly on an upper portion of the beading part; and crimping an end portion of the can to couple the cap assembly with the can.

The beading part may have an acute angle with respect to the surface of the can.

The acute angle may be formed in a range from 60° to 80°.

The beading part may be continuously formed along a circumference of the can.

A depth of the beading part inside the can may be in a range from 10% to 20% of a diameter of the can.

At least some of the above and other features of the invention are set out in the claims.

### BRIEF DESCRIPTION OF THE DRAWINGS

The above and other aspects and features of the present disclosure will become more apparent to those of ordinary skill in the art by describing, in detail, embodiments thereof with reference to the accompanying drawings, in which:
FIG. 1 is a perspective view of a secondary battery according to an embodiment of the present disclosure;
FIG. 2 is a cross-sectional view of the secondary battery shown in FIG. 1;
FIG. 3 is an enlarged view of the portion A in FIG. 2;
FIG. 4 is a cross-sectional view of a secondary battery according to another embodiment of the present disclosure;
FIG. 5 is a cross-sectional view of a secondary battery according to another embodiment of the present disclosure; and
FIGS. 6A to 6D are diagrams illustrating a beading process and a crimping process in a method of manufacturing a secondary battery according to an embodiment of the present disclosure.

### DETAILED DESCRIPTION

Hereinafter, embodiments of the present disclosure will be described, in detail, with reference to the accompanying drawings. These embodiments of the present disclosure are provided to more completely describe the present disclosure to those skilled in the art, and the following embodiments can be modified into various other forms. Thus, the scope of the present disclosure is not limited to the following embodiments. Rather, these embodiments are provided to describe aspects and features of the present disclosure and to fully convey this disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

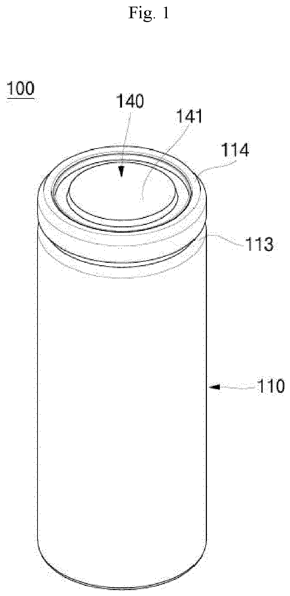

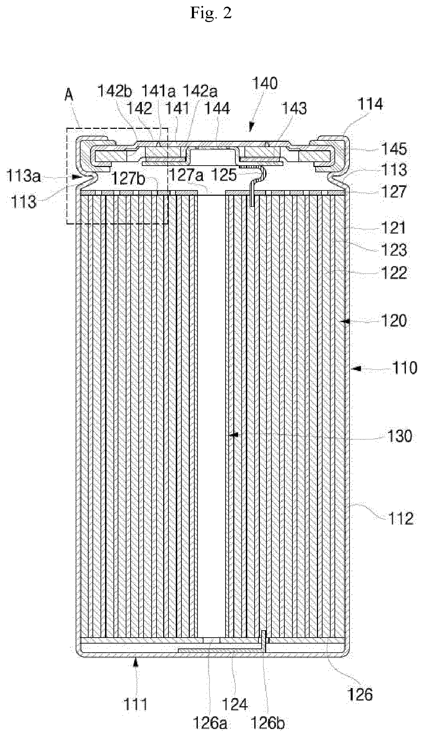

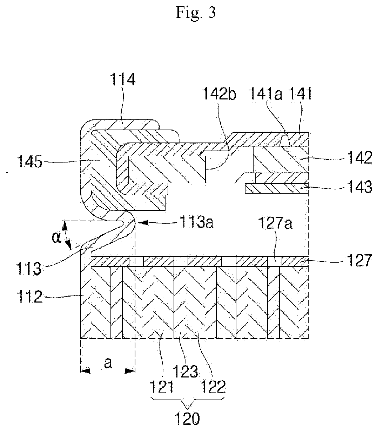

FIG. 1 is a perspective view of a secondary battery according to an embodiment of the present disclosure. FIG. 2 is a cross-sectional view of the secondary battery shown in FIG. 1. FIG. 3 is an enlarged view of the portion A in FIG. 2.

As shown in FIGS. 1 to 3, a secondary battery 100, according to an embodiment of the present disclosure, includes a can 110, an electrode assembly 120, and a cap assembly 140. In some embodiments, the secondary battery 100 may further include a center pin 130. In addition, in an embodiment in which the cap assembly 140 also performs a current interrupt operation, the cap assembly 140 may be referred to as a current interrupt device.

The can 110 may have substantially a circular flat part 111 and a cylindrical side wall 112 extending upwardly a length (e.g., a predetermined length) from a circumference (or periphery) of the flat part 111. During a manufacturing process of the secondary battery 100, the top of the can 110 is open. Thus, during an assembly process of the secondary battery 100, the electrode assembly 120 and the center pin 130 may be inserted into the can 110 together with an electrolyte. The can 110 may be made of, for example, steel, stainless steel, aluminium, an aluminium alloy, or equivalents thereof, but the present disclosure is not limited thereto.

In addition, the can 110 may have a beading part (e.g., a bead) 113 recessed inwardly at a lower portion of (e.g., below) the cap assembly 140 and a crimping part (e.g., a crimped end) 114 bent inwardly at an upper portion of (e.g., above) the cap assembly 140 to prevent the cap assembly 140 from being separated to the outside of the can 110.

The beading part 113 is formed by being recessing a portion of the can 110 inwardly (e.g., into the inside of the can 110) and may divide the can 110 into a region below the beading part 113 at where the electrode assembly 120 is accommodated and a region above the beading part 113 at where the cap assembly 140 is accommodated. In addition, a height of the beading part 113 corresponds to a gap (or a space) between the electrode assembly 120 and the cap assembly 140 within the can 110 such that reducing the height of the beading part 113 can help increase battery capacity and energy density. A more detailed configuration of the beading part 113 will be described below.

The electrode assembly 120 is accommodated inside the can 110. The electrode assembly 120 may include a negative electrode plate 121 including a negative electrode collector plate coated with a negative electrode active material (e.g., graphite, carbon, or the like), a positive electrode plate 122 including a positive electrode collector plate coated with a positive electrode active material (e.g., a transition metal oxide (LiCoO₂, LiNiO₂, LiMn₂O₄, or the like)), and a separator 123 positioned between the negative electrode plate 121 and the positive electrode plate 122 to prevent a short circuit therebetween while allowing for the movement of lithium ions therebetween. In addition, the negative electrode plate 121, the positive electrode plate 122, and the separator 123 may be wound in an approximately cylindrical shape. In one embodiment, for example, the negative electrode collector plate may be made of a copper (Cu) foil, the positive electrode plate current collector may be made of an aluminium (Al) foil, and the separator may be made of polyethylene (PE) or polypropylene (PP), but the present disclosure is not limited thereto.

In addition, the secondary battery 100 may include a negative electrode tab 124 extending and protruding downwardly a length (e.g., a predetermined length) from the electrode assembly 120 welded to the negative electrode plate 121 and a positive electrode tab 125 extending and protruding upwardly a length (e.g., a predetermined length) welded to the positive electrode plate 122, but the reverse is also possible. In addition, for example, the negative electrode tab 124 may be formed of Cu or nickel (Ni), and the positive electrode tab 125 may be formed of Al, but the present disclosure is not limited thereto.

In addition, the negative electrode tab 124 of the electrode assembly 120 may be welded to the flat part 111 of the can 110. Therefore, the can 110 may act as a negative electrode. In another embodiment, however, the positive electrode tab 125 may be welded to the flat part 111 of the can 110, and in this embodiment, the can 110 may act as a positive electrode.

The secondary battery 100 may also include a first insulating plate 126, which is coupled to the can 110 and has a first hole (e.g., a first opening) 126a formed in the center thereof and a second hole (e.g., a second opening) 126b formed at an outer side of (or outside of) the first hole 126a, and may be interposed between the electrode assembly 120 and the flat part 111. The first insulating plate 126 prevents the electrode assembly 120 from coming into electrical contact with the flat part 111 of the can 110. For example, the first insulating plate 126 prevents the positive electrode plate 122 of the electrode assembly 120 from coming into electrical contact with the flat part 111. When a large amount of gas is generated in the can 110 due to an abnormality in the secondary battery 100, the first hole 126a allows the gas to quickly move upwardly through the center pin 130, and the second hole 126b allows the negative electrode tab 124 to pass therethrough to be welded to the flat part 111.

The secondary battery 100 may also include a second insulating plate 127, which is coupled to the can 110 and has a first hole 127a formed in the center thereof and a plurality of second holes 127b formed at an outer side of (e.g., outside of) the first hole 127a, and may be interposed between the electrode assembly 120 and the cap assembly 140. The second insulating plate 127 prevents the electrode assembly 120 from coming into electrical contact with the cap assembly 140. For example, the second insulating plate 127 prevents the negative electrode plate 121 of the electrode assembly 120 from coming into electrical contact with the cap assembly 140. When a large amount of gas is generated in the can 110 due to an abnormality in the secondary battery 100, the first hole 127a allows the gas to quickly move to the cap assembly 140, and the second hole 127b allows the positive electrode tab 125 to pass therethrough to be welded to the cap assembly 140. In addition, during an electrolyte injection process, the other second holes 127b allow an electrolyte to quickly flow into the electrode assembly 120.

In addition, because diameters of the first holes 126a and 127a in the first and second insulating plates 126 and 127 are each smaller than a diameter of the center pin 130, the center pin 130 is prevented from coming into electrical contact with the flat part 111 or the cap assembly 140 of the can 110 due to an external impact.

The center pin 130 is a hollow, circular tube and may be coupled at substantially the center of the electrode assembly 120. The center pin 130 may be made of, for example, steel, stainless steel, aluminium, an aluminium alloy, or polybutylene terephthalate, but the present disclosure is not limited thereto. During charging and discharging of the battery, the center pin 130 suppresses deformation of the electrode assembly 120 and acts as a passage for a gas generated inside the secondary battery 100. In some embodiments, the center pin 130 may be omitted.

The cap assembly 140 may include a top plate 141, a middle plate 142, an insulating plate 143, and a bottom plate 144.

The top plate 141 has substantially a flat upper surface and a flat lower surface opposite to the upper surface and may have a notch 141a formed in the lower surface thereof. The notch 141a may have a cross-sectional shape of, for example, a "Λ" shape (e.g., an inverted V shape), but the present disclosure is not limited thereto. In various embodiments, the notch 141a may have, for example, a substantially circular, elliptical, or "C" planar shape when viewed from below, but the present disclosure is not limited thereto. When the pressure of an internal gas in the secondary battery 100 is greater than a reference pressure, the notch 141a is broken (e.g., bursts) to quickly discharge the internal gas from the secondary battery 100 to the outside, thereby securing the safety of the secondary battery 100.

In addition, a central region 141d of the upper surface of the top plate 141 may be formed to be substantially flat. The central region 141d acts as a terminal of the secondary battery 100 and may be electrically connected to an external device (e.g., a load or charger). A side portion of the top plate 141 is bent substantially downward from the upper surface to surround (e.g., to extend around a periphery of) an edge of the middle plate 142 from the outer side. In this way, the top plate 141 may be coupled to the middle plate 142.

In addition, the height of the upper surface of the top plate 141 is smaller than or equal to the height of the crimping part 114 of the circular can 110 (e.g., the upper surface of the top plate 141 is recessed from or planar with the crimping part 114) so that the internal volume of the can 110 may be relatively increased, and thus, the capacity of the secondary battery may be increased. The height may be the height measured from the flat part 111 of the can 110.

The top plate 141 may be formed of, for example, aluminium, an aluminium alloy, or equivalents thereof, but the present disclosure is not limited thereto. Thus, a busbar made of aluminium, an external lead, or an external device may be easily connected (or welded) to the top plate 141.

The top plate 141 may be formed of a 1XXX series aluminium, which refers to aluminium having an Al purity of 99.0% or higher, a 2XXX series aluminium alloy, which refers to Al-Cu-based alloys, a 3XXX series aluminium alloy, which refers to Al-Mn-based alloys, a 4XXX series aluminium alloy, which refers to Al-Si-based alloys, a 5XXX series aluminium alloy, which refers to Al-Mg-based alloys, a 6XXX series aluminium alloy, which refers to Al-Mg-Si alloys, and a 7XXX series aluminium alloy, which refers to Al-Zn-(Mg,Cu)-based alloys.

The top plate 141 may be formed of a relatively soft aluminium from among the above-described series. For example, the top plate 141 may be formed of the 5XXX series aluminium alloys (e.g., 5052, 5056, 5083, and 5454), which are Al-Mg alloys having excellent strength, corrosion resistance, and weldability as soft materials, but the present disclosure is not limited thereto. In addition to the above-mentioned aluminium alloys, the 1XXX, 3XXX, or 4XXX series aluminium alloys, which are non-heat treatable alloys, may be used as a material for the top plate 141.

The middle plate 142 is positioned below the top plate 141 and may have substantially a flat shape. The middle plate 142 may have a first through-hole 142a formed substantially in the center thereof. The middle plate 142 may also have a plurality of second through-holes 142b formed in the vicinity of (e.g., around a periphery of) the first through-hole 142a.

The first through-hole 142a allows the bottom plate 144, which will be described below, to pass therethrough to be electrically connected to the top plate 141 and also allows the internal gas (e.g., the pressure of the internal gas) to be directly applied to the top plate 141. In addition, the second through-holes 142b allow the internal gas to be directly applied to the top plate 141.

The notch 141a formed in the top plate 141 may be formed, for example, in a region between the first through-hole 142a and the second through-hole 142b of the middle plate 142, but the present disclosure is not limited thereto.

The middle plate 142 may be formed of, for example, aluminium, an aluminium alloy, stainless steel, or equivalents thereof, but the present disclosure is not limited thereto.

The insulating plate 143 may be positioned at (or may be attached to) a lower portion (e.g., a lower surface) of the middle plate 142 and may have a circular ring shape with a hole formed in the central region thereof corresponding to the first through-hole 142a in the middle plate 142. This insulating plate 143 insulates the middle plate 142 from the bottom plate 144. The insulating plate 143 may be, for example, interposed between the middle plate 142 and the bottom plate 144 and ultrasonically welded to one or both thereof, but the present disclosure is not limited thereto.

The insulating plate 143 may be formed of, for example, PE, PP, ethylene propylene diene monomer (EPDM) rubber (EPDM rubber), or equivalents thereof, but the present disclosure is not limited thereto. Because these insulating materials are non-reactive with an electrolyte, the insulating plate 143 is not deformed despite long-term use of the secondary battery 100.

The bottom plate 144 is electrically connected to the top plate 141 through the holes in the insulating plate 143 and the middle plate 142 to be attached to the insulating plate 143. The positive electrode tab 125 may be electrically connected to a lower portion of (e.g., a lower surface of) the bottom plate 144. In addition, when the pressure of the internal gas of the secondary battery 100 is greater than a reference (or predetermined) pressure, the top plate 141 is deformed (e.g., is inverted) to be upwardly convex. In this case, the bottom plate 144 may be separated from the deformed top plate 141 such that a current path between the top plate 141 and the bottom plate 144 is cut off.

The bottom plate 144 may be formed of, for example, aluminium, an aluminium alloy, or equivalents thereof, but the present disclosure is not limited thereto. Thus, the positive electrode tab 125 made of aluminium may be easily welded thereto.

The cap assembly 140 may further include an insulating gasket 145, which insulates the top plate 141 from the side wall 112 of the can 110. The insulating gasket 145 is substantially pressed between the beading part 113 and the crimping part 114, which are formed in the side wall 112 of the can 110. In addition to the sides of the top plate 141, the insulating gasket 145 substantially surrounds (or covers) some regions of the upper and lower portions (of surfaces) thereof, thereby sealing the inside of the secondary battery 100.

In addition, an electrolyte may be injected into the inside of the can 110, and the electrolyte allows lithium ions, which are generated due to an electrochemical reaction between the negative electrode plate 121 and positive electrode plate 122 inside the secondary battery 100 during charging and discharging, to move. The electrolyte may be a non-aqueous organic electrolyte that is a mixture of a lithium salt and a high purity organic solvent. In some embodiments, the electrolyte may be a polymer or solid electrolyte using a polymer electrolyte, but the type of electrolyte is not limited here.

Hereinafter, a configuration of the beading part 113 formed in the can 110 in the secondary battery 100 according to an embodiment of the present disclosure will be described in more detail.

FIG. 3 is an enlarged view of the portion A in FIG. 2.

Referring to FIG. 3, an enlarged view of the beading part 113 formed in the can 110 is shown. The beading part 113 may be formed to be recessed inwardly relative to the side wall 112 of the can 110. In embodiments of the present disclosure, when the beading part 113 is recessed into the inside of the can 110, a depth a to an inner surface 113a may be in a range of about 10% to about 20% of the overall diameter of the can 110. When the beading part 113 is recessed to a ratio of about 10% or more of the diameter of the can 110, it may better secure the physical rigidity of the can 110 and may better support the cap assembly 140 positioned at the upper portion of the can 110. When the recessed depth a is about 20% or less of the overall diameter of the can 110, the capacity of the secondary battery 100 may be improved by reducing the height of the can 110 that increases as the depth a of the beading part 113 increases. The beading part 113 may continuously extend along a circumference of the can 110.

An angle α formed by the beading part 113 recessed from the surface of the can 110 is an acute angle. A conventional beading part formed in a cylindrical battery is simply recessed inwardly, and thus, an angle formed by the beading part is generally about 0°. On the other hand, in the secondary battery 100 according to an embodiment of the present disclosure, the beading part 113 is formed to have an acute angle, such as in a range of about 20° to about 45°.

When the angle α formed by beading part 113 is about 20° or more, a bent portion of the beading part 113 is better able to withstand the pressure applied in a vertical direction along the length of the can 110. Thus, when the can 110 is pressed, the beading part 113 may not be folded to secure rigidity thereof. In addition, when the angle α formed by the beading part 113 is about 45° or less, an increase in height due to the formation of the beading part 113 is reduced so that the capacity of the secondary battery 100 may be improved.

As described above, in the secondary battery 100 according to an embodiment of the present disclosure, the beading part 113 forms an acute angle with respect to the edge (or side wall 112) of the can 110 so that rigidity is secured and the total height of the secondary battery 100 after crimping is completed is reduced so that the capacity can be increased.

Hereinafter, a configuration of a secondary battery according to another embodiment of the present disclosure will be described.

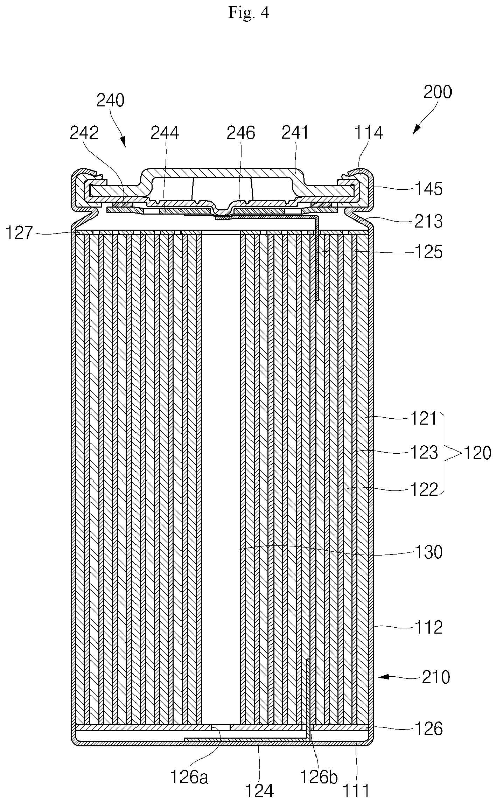

FIG. 4 is a cross-sectional view of a secondary battery according to another embodiment of the present disclosure. The same reference numerals are used to identify the same or substantially similar components as in the above-described embodiment. Thus, differences from the above-described embodiment will be primarily described.

Referring to FIG. 4, a secondary battery 200 according to another embodiment of the present disclosure includes a can 210, an electrode assembly 120, and a cap assembly 240. In some embodiments, the secondary battery 200 may further include a center pin 130.

The can 210 has a beading part 213. The beading part 213 is formed by being recessed into the inside of the can 210 and may divide the can 210 into a region below the beading part 213 at where the electrode assembly 120 is accommodated and a region above the beading part 213 at where the cap assembly 240 is accommodated. In addition, similar to the above-described embodiment, the beading part 213 may be (e.g., may protrude inwardly from the side wall) in a range of about 10% to about 20% of the overall diameter of the can 210. In addition, an angle α formed by the beading part 213 recessed from the surface of the can 210 is an acute angle. Accordingly, rigidity may be secured through the beading part 213 formed in the can 210 and capacity may be increased by reducing the total height of the secondary battery 200 after crimping is completed.

The cap assembly 240 may include cap-up 241, a cap-down 246 formed below the cap-up 241, an insulating ring 242 formed on the cap-down 246, and a subplate 244 connected to a positive electrode tab 125 and coupled at substantially the center of the cap-down 246. The cap assembly 240 having the above-described cap-up structure has a cap-up 241 with positive polarity and that protrudes upwardly, while other structures may operate in the same manner as in the above-described embodiment.

Hereinafter, a configuration of a secondary battery according to another embodiment of the present disclosure will be described.

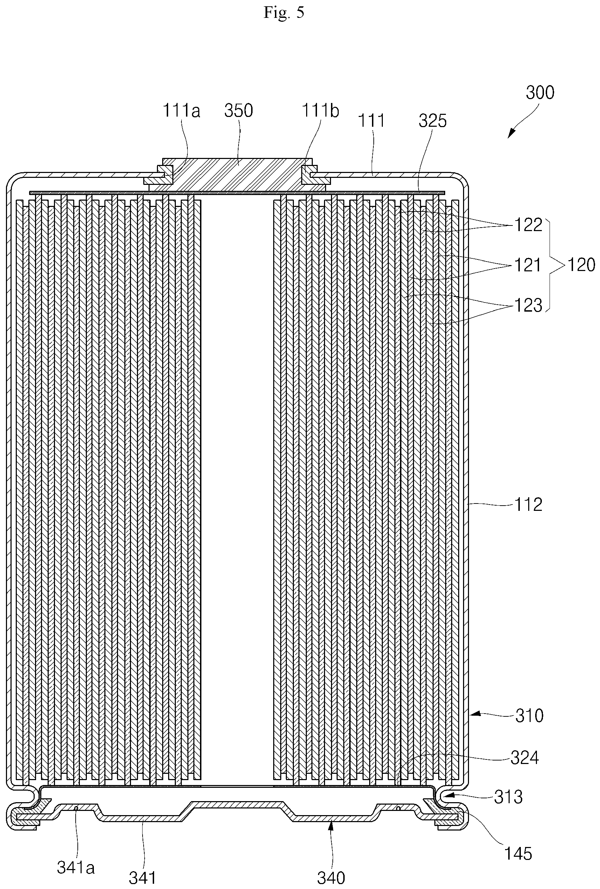

FIG. 5 is a cross-sectional view of a secondary battery according to another embodiment of the present disclosure.

Referring to FIG. 5, a secondary battery 300 according to another embodiment of the present disclosure may include a can 310, an electrode assembly 120 accommodated inside the can 310, a cap assembly 340 sealing an opening at one end of the can 310, and a rivet terminal 350 coupled to a terminal hole (or terminal opening) provided at another end of the can 310.

The can 310 has a circular flat part 111 and a side wall 112 extending downwardly to a length (e.g., a predetermined length) from an edge of (or a periphery of) the flat part 111. In the illustrated embodiment, the flat part 111 may form (or may be) a top surface instead of a bottom surface as in the above embodiment. In addition, a terminal hole 111a is formed substantially at the center of the flat part 111, and an insulating member 111b is provided along an edge of the terminal hole 111a so that the rivet terminal 350 may be inserted and insulated therefrom. In addition, the side wall 112 of the can 310 is coupled to a negative electrode plate 121 of the electrode assembly 120 through a negative electrode collector plate 324 so that the entirety of the can 310 may act as a negative electrode.

In addition, the can 310 has a beading part 313. The beading part 313 is formed by being recessed into the inside of the can 310 and, as in the above-described embodiments, the beading part 313 may be in a range of about 10% to about 20% of the overall diameter of the can 310. In addition, an angle α formed by the beading part 313 recessed from the surface of the can 310 is an acute angle. Therefore, rigidity may be secured through the beading part 313 formed in the can 310 and capacity may be increased by reducing the total height in the secondary battery 300 after crimping is completed.

The cap assembly 340 may be coupled to the can 310 through the beading part 313 formed at a lower side (or lower end) of the side wall 112. The cap assembly 340 includes a cap plate 341 that may be formed of a circular metal plate, coupled to the can 310 with an insulating gasket 145 interposed therebetween, and crimped. In addition, irregularities (e.g., corrugations) may be formed in the cap plate 341 to improve rigidity, and notches 341a may be formed in some regions thereof.

The rivet terminal 350 may be inserted into the terminal hole 111a provided in the flat part 111 of the can 110 and electrically connected to a positive electrode collector plate 325. Thus, the rivet terminal 350 may act as a positive electrode according to the polarity of the positive electrode plate 122 coupled to the positive electrode collector plate 325.

Hereinafter, a method of manufacturing a secondary battery according to an embodiment of the present disclosure will be described.

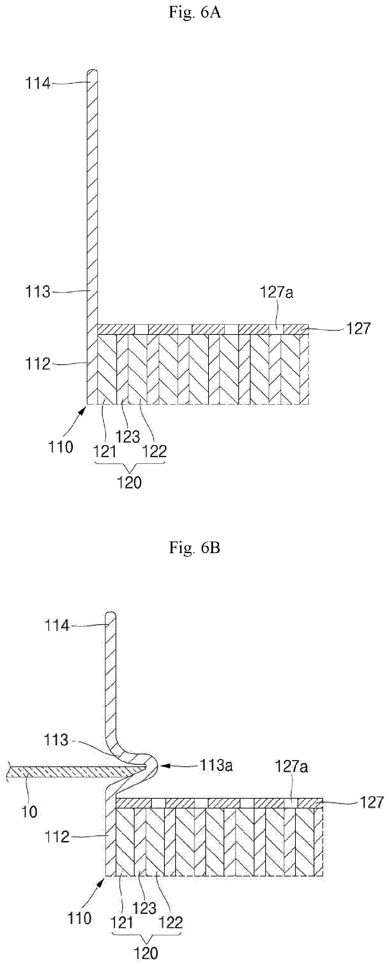

FIGS. 6A to 6D are diagrams illustrating a beading process and a crimping process in a method of manufacturing a secondary battery according to an embodiment of the present disclosure.

First, referring to FIG. 6A, in the method of manufacturing a secondary battery according to an embodiment of the present disclosure, the electrode assembly 120 is accommodated inside the can 110. In this case, the beading part 113 and the crimping part 114 of the can 110 are not yet bent (or formed) and may form the cylindrical side wall 112 of the can 110. Thus, the electrode assembly 120 may be easily accommodated inside the can 110.

Next, referring to FIG. 6B, the beading part 113 is formed by using a knife 10 at a designated region from the outside of the can 110. In addition, a depth of the inner surface 113a of the beading part 113 may be formed as described above. However, an angle formed by the beading part 113 along a surface of the can 110 may be set to be somewhat greater than that of the secondary battery 100 in the above-described embodiments. For example, when the beading part 113 is formed, the angle of beading part 113 may be an angle in a range from about 60° to about 80°. Thereafter, even when the angle decreases as the crimping progresses and, thus, the beading part 113 is pressed, the final angle may be maintained in a range from about 20° to about 45°, which is the range of the angle in the secondary battery 100 of the above-described embodiment. The beading part 113 may be continuously formed along a circumference of the can 110.

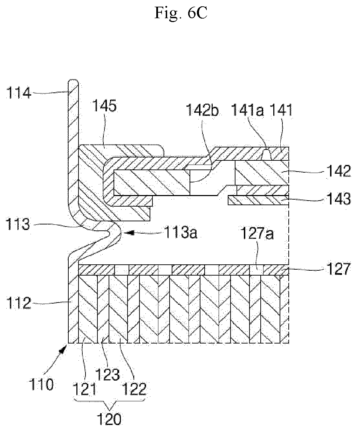

Referring to FIG. 6C, the cap assembly 140 may be accommodated from the top of the can 110. In addition, the cap assembly 140 may be set to substantially fit (or substantially correspond to) the inner diameter of the can 110 and may be coupled by resting on the beading part 113.

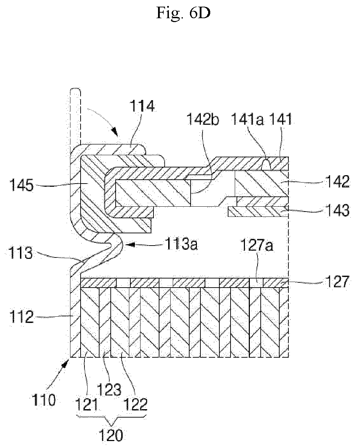

Finally, referring to FIG. 6D, a crimping process is performed on the crimping part 114 so that the crimping part 114 may be deformed to surround (or cover) an upper portion of the insulating gasket 145. Thus, the crimping part 114 may be mechanically coupled to the insulating gasket 145 to fix the cap assembly 140 to the inside of the can 110.

In accordance with embodiments of the present disclosure, a beading part having an acute angle is formed in a side wall of a can so that rigidity thereof can be secured and capacity can be increased by reducing the total height of the secondary battery after crimping is completed.

The above description is merely some embodiments for implementing the secondary battery according to the present disclosure, and the present disclosure is not limited to the above embodiments. As described in the appended claims and their equivalents, the present disclosure will be considered to the extent that various modifications can be made by anyone skilled in the art without departing from the gist of the present disclosure.

## Claims

1. A secondary battery comprising:
a can having an accommodation space therein;
an electrode assembly accommodated in the accommodation space in the can; and
a cap assembly sealed with the can,
wherein the can has a beading part recessed into a side wall of the can at a region below where the cap assembly is accommodated, and
wherein the beading part has an acute angle with respect to the side wall of the can.

2. The secondary battery of claim 1, wherein the beading part continuously extends along a circumference of the can.

3. The secondary battery of claim 1 or claim 2, wherein the acute angle is in a range from 20° to 45°.

4. The secondary battery of any one of claims 1 to 3, wherein a depth of the beading part inside the can is in a range from 10% to 20% of a diameter of the can.

5. The secondary battery of any one of claims 1 to 4, wherein the cap assembly is seated on an upper portion of the beading part.

6. A method of manufacturing a secondary battery, the method comprising:
accommodating an electrode assembly in an accommodation space in a can;
forming a beading part by pressing a surface of the can with a knife;
seating a cap assembly on an upper portion of the beading part; and
crimping an end portion of the can to couple the cap assembly with the can.

7. The method of claim 6, wherein the beading part has an acute angle with respect to the surface of the can.

8. The method of claim 7, wherein the acute angle is formed in a range from 60° to 80°.

9. The method of any one of claims 6 to 8, wherein the beading part is continuously formed along a circumference of the can.

10. The method of any one of claims 6 to 9, wherein a depth of the beading part inside the can is in a range from 10% to 20% of a diameter of the can.
